# EUROPEAN PATENT SPECIFICATION

(11) **EP 2 380 383 B1**
(45) Date of publication and mention of the grant of the patent: **16.01.2013**
(21) Application number: 09795660.1
(22) Date of filing: 22.12.2009
(51) Int. Cl.: H04W 64/00

(54) **A METHOD AND APPARATUS FOR PROVIDING AND UTILIZING LOCAL MAPS AND ANNOTATIONS IN LOCATION DETERMINATION**
VERFAHREN UND VORRICHTUNG ZUM BEREITSTELLEN UND BENUTZEN VON LOKALEN KARTEN UND ANMERKUNGEN BEI DER AUFENTHALTSORTSBESTIMMUNG
PROCÉDÉ ET APPAREIL POUR FOURNIR ET UTILISER DES CARTES LOCALES ET DES ANNOTATIONS LORS D'UNE DÉTERMINATION DE L'EMPLACEMENT

(30) Priority: 22.12.2008 US 139993 P; 22.12.2008 US 140023 P; 17.12.2009 US 641225
(43) Date of publication of application: 26.10.2011
(60) Divisional application: 12007671.6
(73) Proprietor: QUALCOMM Incorporated, San Diego, CA 92121 (US)
(72) Inventor: DAS, Saumitra Mohan, San Diego California 92121 (US); AGGARWAL, Alok, San Diego California 92121 (US); NAGUIB, Ayman Fawzy, San Diego California 92121 (US); SRIDHARA, Vinay, San Diego California 92121 (US); HARDIE, Edward Thomas Lingham, San Diego California 92121 (US)
(74) Representative: Carstens, Dirk Wilhelm
(86) International application number: PCT/US2009/069123
(87) International publication number: WO 2010/075341

(56) References cited:
- EP-A1- 1 197 111
- US-A1- 2003 100 316
- US-A1- 2007 026 847
- US-A1- 2007 037 558

## Description

### BACKGROUND

### Field:

The subject matter disclosed herein relates to using local maps and annotations for location determination.

### Information:

Different techniques may be used to estimate the location of a mobile device, such as a cell phone, personal digital assistant (PDA), or any other mobile device. For example, some mobile devices may process signals received from a Satellite Positioning System (SPS) to estimate their locations. However, sometimes there are certain areas where navigation signals from an SPS may not be available, such as in certain indoor locations.

A mobile device may estimate its location within an area where navigation signals transmitted from an SPS are not available. For example, a mobile device may transmit a signal to an access point and measure a length of time until a response signal from the access point is received. A range from the mobile device to the access point may be determined based upon the measured length of time between transmission of a signal from the mobile device and receipt of a response signal at the mobile device. Alternatively, signal strength of a signal received from the access point may be measured and a range from the mobile device to the access point may be estimated based on the measured signal strength. An access point may comprise a device that allows wireless communication devices to communicate with a network.

However,an access point may experience a processing delay between a time at which a signal is received from a mobile device and a time at which a response signal is transmitted to the mobile device. Such a processing delay may vary depending upon a particular access point, and may need to be accounted for when a mobile device estimates a range to the access point based on the measured time interval. Moreover, signal strength of a received signal may vary based upon physical structures within an area, such as a presence of ceiling and walls, causing a variance in received signal strength which may result in inaccurate estimates of range to the access point if there is no accounting for such a variance caused by a presence of physical structures, for example.

### BRIEF DESCRIPTION OF THE FIGURES

Non-limiting and non-exhaustive features will be described with reference to the following figures, wherein like reference numerals refer to like parts throughout the various figures.

FIG. 1 is a plan view of a floor of an office building having various wireless network elements according to one particular implementation.

FIG. 2 is an illustration of an area surrounding a wireless network element according to one implementation.

FIG. 3 is a depiction of a display screen of a mobile device according to one implementation.

FIG. 4 is a schematic block diagram of a system for providing a local map and annotations to a mobile device according to one implementation.

FIG. 5 is a flow diagram illustrating a process for obtaining a local map for a given area according to one implementation.

FIG. 6 is a schematic block diagram of a wireless network element according to one implementation.

FIG. 7 is a schematic block diagram of particular implementation of a mobile device according to one implementation.
Attention is drawn to document US2003100316 (A1), which describes a portable radio terminal that includes a GPS signal processor for determining the position of the portable radio terminal, and requests a system server to transmit map image data and landmark data in the vicinity of the portable radio terminal. The system server transmits the map image data and landmark data separately to allow the display unit of the portable radio terminal to represent desired landmarks overlapped with the map image on the display unit.

### SUMMARY

In accordance with the present invention, a method, as set forth in claim 1 and an apparatus, as set forth in claim 9, is provided. Embodiments of the invention are claimed in the dependent claims.

In one particular implementation, a system and method is provided for retrieving a local map for a given area. One or more signals wirelessly transmitted from one or more wireless network elements may be received by a mobile device. The mobile device may identify an associated local map based at least in part on the received one or more signals. Such signals may be received from wireless network elements that indicate their presence along with a unique identifier for such wireless network elements such as a Media Access Control (MAC) address, for example. The associated local map and annotations associated with the associated local map may subsequently be obtained, for example, by associating local maps with wireless network element identifiers indicated on a particular local map. The associated local map may utilize a predefined coordinate system. In one implementation, features of the map such as walls, doors, and room numbers, for example, are represented using a local coordinate system with its own datum (e.g., x,y coordinates in units such as feet). It should be understood, however, that this is merely an example implementation and that claimed subject matter is not limited in this respect.

### DETAILED DESCRIPTION

Reference throughout this specification to "one example," "one feature," or "an example" means that a particular feature, structure, or characteristic described in connection with the feature and/or example is included in at least one feature and/or example of claimed subject matter. Thus, the appearances of the phrase "in one example", "an example", "in one feature" or "a feature" in various places throughout this specification are not necessarily all referring to the same feature and/or example. Furthermore, the particular features, structures, or characteristics may be combined in one or more examples and/or features.

A mobile device may determine its location or position. In one implementation, a mobile device may estimate its location based on signals wirelessly received from wireless network elements for other devices capable of wirelessly transmitting signals. For example, a mobile device may be utilized within an area where navigation signals from a Satellite Positioning System (SPS) are not available, such as within certain buildings. Wireless network elements may be located throughout such an area at known locations and a mobile device may estimate ranges from the mobile device to particular wireless network elements. Such ranges can be estimated, and a location of such a mobile device may be triangulated using known techniques.

In one implementation, a mobile device may estimate its own location by communicating with one or more nearby femtocells. A "femtocell," as used herein, may refer to a small cellular base station. Such a femtocell may connect to a service provider's network via broadband (such as, for example, via Digital Subscriber Line (DSL) or cable). A femtocell may, for example, utilize a technology such as Universal Mobile Telecommunications System (UTMS), Long Term Evolution (LTE), Evolution-Data Optimized or Evolution-Data only (EV-DO), Global System for Mobile communications (GSM), Worldwide Interoperability for Microwave Access (WiMAX), Code division multiple access (CDMA) -2000, or Time Division Synchronous Code Division Multiple Access (TD-SCDMA), to name just a few among many possible technologies compatible with femtocells. A femtocell may also have integrated Wi-Fi. Round-trip time ranging may be performed by utilizing the femtocell.

A mobile device may use any one of several techniques to estimate a range from the mobile device to a wireless network element. One way of estimating such a range is by wirelessly transmitting a probe request signal to a particular wireless network element. Upon receiving such a probe request, a wireless network element may wirelessly transmit a response signal. A mobile device may measure a time interval (referred to herein as "roundtrip time") between when the mobile device transmits the probe request and a time at which the response signal is received. Wirelessly transmitted signals may travel at a known speed, such as at the speed of light. Accordingly, based upon a roundtrip time between when the probe request is transmitted and when the response is received, a range may be estimated. However, a wireless network element typically experiences a processing delay between a time at which a probe request is received and a time at which a response signal is transmitted. To ensure an accurate estimate of range based on a measured time interval, the mobile device may subtract an estimate of the processing delay from the measured roundtrip time interval. However, different wireless network elements may experience different processing delays. To precisely account for such different processing delays, an estimate of a processing delay specific to a particular wireless network element may be provided to a mobile device as an annotation map for a given area. Once a measurement of roundtrip time between transmitting a probe request and receiving a response signal has been obtained and a processing delay specific to a wireless network element has been subtracted, a measurement of a range to the wireless network element from the mobile device may be estimated based on such a time measurement.

"Wireless network element," as used herein, may refer to a device that allows wireless communication devices to communicate with a network. For example, a wireless network element may comprise, for example, an access point (e.g., a Wi-Fi access point), a femtocell, etc., and may allow wireless communication devices to connect to a wireless network using Wi-Fi, Bluetooth, a cellular communication technology such as Code Division Multiple Access (CDMA), Time Division Multiple Access (TDMA), Frequency Division Multiple Access (FDMA), Orthogonal Frequency Division Multiple Access (OFDMA), Single-Carrier Frequency Division Multiple Access (SC-FDMA), or any other suitable wireless technology and/or standard.

Another technique for estimating a range from a mobile device to a wireless network element includes measuring signal strength of a signal received from a wireless network element. A response signal may be transmitted from a wireless network element to a mobile device in response to a probe request, as discussed above, and a strength of such a response signal may be measured. Based on such a measured signal strength, the range from the mobile device to a wireless network element may be estimated. Alternatively, a wireless network element may periodically broadcast a signal without first receiving a probe request, and a strength of such a received broadcast signal may be measured. In one implementation, wireless network elements may transmit signals at a known signal strength. In a location with no obstructions, for example, a strength of a signal transmitted from a wireless network element may decrease at a known rate over a given range. For example, if a signal strength of a received signal is 80.23% of the strength at which such a signal is transmitted by a wireless network element, a mobile device may estimate a range to the wireless network element to be 100.45 meters in one example implementation. On the other hand if a signal strength of a received signal is measured to be 82.57% of the strength at which such a signal is transmitted by a wireless network element, a mobile device may estimate a range to the wireless network element to be 91.35 meters in one example implementation. Signal strength may decrease at a known rate over distance and, based on the measurement of signal strength of a signal received from a wireless network element, a range from a mobile device to a wireless network element may be estimated. In one example, an annotation on a map for an area may be provided that specifies a mapping of signal strength to distance for a specific wireless network element.

However, the presence of obstructions between a wireless network element and a mobile device may reduce a strength of a signal transmitted from a wireless network element to a mobile device. For example, in an indoor location, a presence of walls between a wireless network element and a mobile device may dissipate a strength of a transmitted signal. Moreover, an amount by which such a signal strength is dissipated may be dependent upon a material of which such a wall is made. For example, a wall made out of drywall may dissipate a strength of a signal by a lower amount than would a wall made of concrete. Accordingly, in order to ensure an accurate estimate of range to a wireless network element from a mobile device based on a measured signal strength, an accounting may be made for such obstructions or a presence of other factors which may reduce signal strength. For example, a conversion formula indicating distance relative to a measured signal strength may be determined for a wireless network element. Such a formula may be dependent based upon a location of a mobile device receiving a signal from a wireless network element. For example, such a formula may apply different weights if a mobile device is 50 meters from a wireless network element and there are no obstructions, than if the mobile device is located somewhere else 50 meters from the wireless network element, but there are several obstructions, such as walls, through which a signal must travel. Such a formula or mathematical relationship may be provided to a mobile device to use in estimating range. In one implementation, such a formula or mathematical relationship may be provided via an annotation to a map.

A mobile device may identify ranges to several wireless network elements. As discussed above, if respective locations of such wireless network elements are known, a mobile device may triangulate its location.

According to one implementation, a mobile device may access a local map if it is within a particular area for which navigations signals from an SPS may not be available. Such a local map may be stored in a location on a network and accessed via Internet, for example. Such a local map may be retrieved and then displayed on a user's mobile device. Such a map may indicate, for example, a location of particular stores within a shopping mall. A mobile device may also retrieve annotations associated with such a local map. Such annotations may be stored at the same location as the local map in some implementations. However, such annotations may be stored in one or more different locations in other implementations. Such annotations may indicate the presence of wireless network elements within an area covered by the local map. In one implementation, such annotations may indicate an estimated processing delay and a formula for estimating a range to one or more wireless network elements based on signal strength of a signal received from the one or more wireless network elements. Such a local map may include a local coordinate system as opposed to a global coordinate system. By utilizing a local coordinate system, a local map may be provided without reference to earth-centered coordinates, such as World Geodetic System (WGS) 84 style global coordinates, for example. A local map may contain structural information about an indoor location specified in a local coordinate system with an origin in the local map itself. Annotations on a local map may comprise information about entities depicted on the local map.

Use of such a local coordinate system may provide certain advantages. For example, it may be easier to locate the devices to which ranging may occur in a local coordinate system than it would be within a global coordinate system. Given a map with a known x,y coordinate grid, access point locations may, for example, be assigned by an information technologies engineer, facilities, or by simply marking them on the map. To perform a similar placement in global coordinate systems, for example, a location is first determined in the global coordinate system. If each point is done natively within a global coordinate system, it may be necessary to perform a location fix based on navigation signals, such as via GPS signals. Performing a location fix based on navigation signals within a building or other structure may, however, be difficult, and is likely to be inaccurate and slow.

Alternatively, multiple location fixes may be taken from pin points in a local coordinate reference system to a global coordinate reference system. Such multiple location fixes may be used to transform local coordinates to global coordinates. To perform such transforming from local to global coordinates, a local coordinate system may first be generated or obtained with accurate placement of network elements within it. Such additional transformation from local to global coordinated may introduce a potential source of error along with requiring extra computations/work.

Upon entering an area, a mobile device may first identify a particular local map associated with the area and may then retrieve the map. In one implementation, a mobile device may broadcast probe requests and may receive response signals from wireless network elements in the area. Some, or all, of such response signals may include information descriptive of a Media Access Control Identifier (MAC ID) which may indicate the identity of the wireless network elements from which such response signals were transmitted. Upon receiving such MAC IDs, a mobile device may reference a database or lookup table, for example, to determine the identity of a map associated with such wireless network elements. In one implementation, a mobile device may access a database accessible via its wireless Internet service provider. Alternatively, a mobile device may access a known network address where such MAC IDs are stored to identify a local map associated with such MAC IDs.

In one implementation, a mobile device may receive signals from wireless network elements associated with one particular local map and additional signals from other wireless network elements associated with a different local map. In such a scenario, a mobile device may determine MAC IDs associated with the received signals having at least a minimum threshold signal strength. A mobile device may then access a database to identify a local map associated with such MAC IDs. In the event that some of the MAC IDs are associated with a first local map and some of the MAC IDs of received signals are associated with a second local map, a mobile device may identify which local map is associated with the strongest received signals, for example. A user may then be presented a choice to select a local map on which they are located from among the likely local maps.

Other ways of identifying a related local map may be utilized in other implementations. In some implementations, a Uniform Reference Identifier ("URI") may be wirelessly transmitted to a mobile device upon entering an area. A "URI," as used herein, may refer to a location where information is stored. For example, a URI may indicate a network address where a local map is stored according to any one of several protocols such as Hypertext Transfer Protocol (HTTP), etc. Such a network address may comprise an Internet address or a local area network address, to name just two among many possible examples. After a URI has been received by a mobile device, the mobile device may access the referenced address or location and retrieve the associated local map.

In one implementation, a local map may be presented to a user and displayed, for example, on a display screen of the user's mobile device. In some implementations, annotations for wireless network elements may be hidden from a user. For example, such annotations for wireless network elements may be hidden because they may clutter a displayed map and a user may not have a desire to view information about such wireless network elements. However, other types of annotations may instead be displayed to a user. A wide array of annotations may be provided to the user's mobile device and displayed. For example, in the event that the user is within a shopping mall, annotations may indicate whether a particular restaurant in the shopping mall has empty seats, locations of cash registers within a store having the shortest wait time to purchase goods, or whether public restrooms are closed for cleaning, to name just a few among many examples.

As discussed above, annotations may be retrieved from one or more locations and may be retrieved from a different location from where a local map is retrieved. In an implementation within a shopping mall, for example, annotations associated with wireless network elements may be retrieved from a first location, annotations associated with a department store may be retrieved from a second location, and annotations associated with common areas of the shopping mall, such as restrooms, may be retrieved from a third location, for example. In one implementation, a mobile device may retrieve various annotations for a local map from different sources and may selectively display one or more of such annotations to a user via a display device.

If a user moves to an area associated with a local map and the user's mobile device identifies and retrieves associated local and related annotations, the mobile device may subsequently utilize annotations related to wireless network elements to determine ranges to wireless network elements. For example, as discussed above, a mobile device may transmit a probe request to one or more wireless network elements and measure a roundtrip time interval until a probe response signal is received from each wireless network element. Such a mobile device may subtract related processing delays associated with relevant wireless network elements, as are indicated by annotations on a local map, and may then estimate ranges to wireless network elements. Such a mobile device may also measure a signal strength of a received signal from various wireless network elements and estimate ranges to such wireless network elements based, at least in part, on a measured signal strength. As discussed above, predefined relationships between received signal strength and range may be indicated on a local map as an annotation for a particular wireless network element. Moreover, such predefined relationships between received signal strength and range may also be dependent upon a particular type of any obstruction between a particular wireless network element and a mobile device. Accordingly, based on such a predefined relationship, a range may be estimated based on the signal strength of a received signal. In one implementation, respective weightings may be determined for a combination of the range results estimated from a probe request roundtrip time interval minus processing delay, and from received signal strength. For example, if one of the methods is determined to yield more accurate results, a larger weighting may be applied to such a method. For example, if an estimate of range determined from received signal strength is estimated to be less accurate than a range estimated from a probe request roundtrip time interval minus processing delay, a weighting of 0.60 may be applied to a range determined from a probe request roundtrip time interval minus processing delay, and a weighting of 0.40 may be applied to a range determined from received signal strength.

If ranges from a mobile device to at least three wireless network elements have been estimated, a mobile device may subsequently triangulate its location. After such a location has been estimated, annotations related to an area where a user is located may be displayed to such a user. For example, directions to a particular store in a shopping mall may be provided to a user based on the user's estimated location.

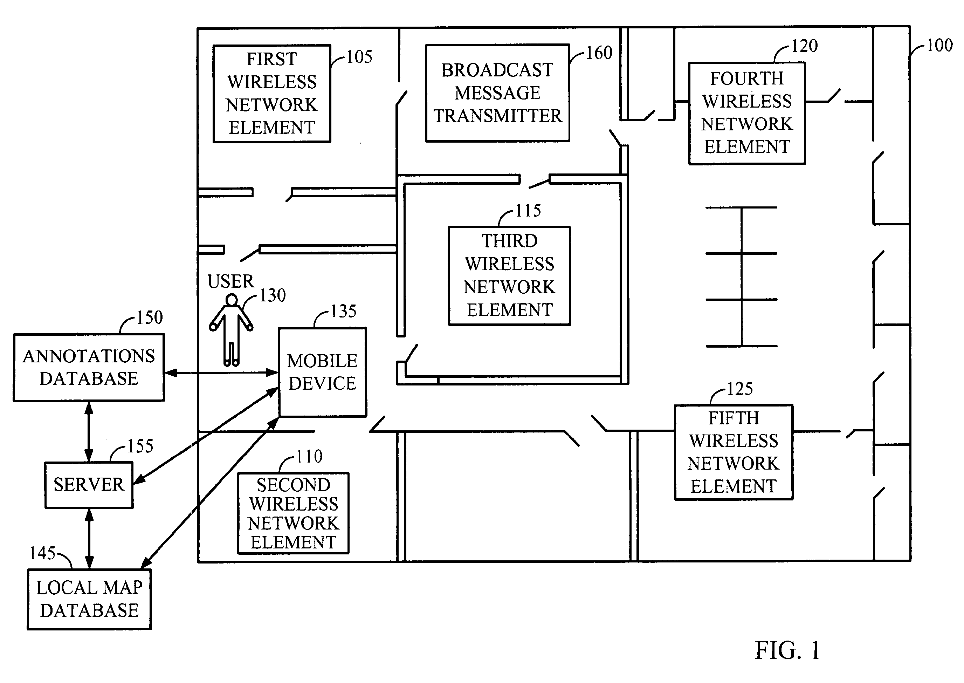

FIG. 1 is a plan view of a floor 100 of an office building having various wireless network elements installed at known locations according to one particular implementation. As illustrated, first wireless network element 105, second wireless network element 110, third wireless network element 115, fourth wireless network element 120, and fifth wireless network element 125 are arranged throughout floor 100. A user 130 may carry a mobile device 135 and move throughout floor 100. An office building may include floor 100 and potentially many other floors. In one implementation, mobile device 135 may estimate its position by communicating with wireless network elements located on the same floor 100 as the mobile device 135 is located. Different floors may have different floor plans and may have different arrangements of wireless network elements, offices, restrooms, libraries, cafeterias, to name just a few variations among many.

Mobile device 135 may include a display screen, such as a Liquid Crystal Display (LCD), a screen with touch capabilities, or any other type of display capable of presenting a graphical user interface. A display of mobile device 135 may present a local map to user 130. Such a local map may present a 2-dimensional floor plan, or a portion of a floor plan of a floor 100 on which user 130 is moving with mobile device 135. Upon moving onto floor 100, mobile device 135 may not initially know the floor 100 on which it is located at that time and may not have a local map of floor 100 to present to user 130. Upon moving onto floor 100, mobile device 135 may determine an identity of a local map corresponding to a location where mobile device 135 is currently being transported, which in this case is floor 100. There are different ways in which mobile device may determine an identity of a local map to present to user 130. After an identity of an appropriate local map to be presented is determined, mobile device 135 may retrieve such a local map and then present such a local map on, for example, a display of mobile device 135.

In a particular implementation, a mobile device may identify an appropriate local map for a location where mobile device 135 is being held by listening to broadcasts from various wireless network elements, such as access points, femtocells, etc. For example, first wireless network element 105 may periodically broadcast a beacon message. Such a beacon message may indicate a MAC ID for first wireless network element 105. Such a MAC ID may indicate an identifier for first wireless network element. Upon extracting such a MAC ID from a beacon message, mobile device may access a database or lookup table to determine the identity of a local map corresponding to first wireless network element 105. For example, a location of and a method of accessing such a database or lookup table may be known prior to user 130 carrying mobile device 135 onto floor 100. In one implementation, a lookup table for MAC IDs may be stored in one or more predefined database locations. Alternatively, a MAC ID associated with a wireless network element may indicate a location of such a database or lookup table. In other implementations, a MAC ID may directly indicate a local map corresponding to first wireless network element 105.

In one implementation, mobile device 135 may transmit an Institute of Electrical and Electronics Engineers (IEEE) 802.11-compliant probe request to one or more wireless network elements located on floor 100. Upon receipt of such an 802.11-compliant probe request, one or more wireless network elements may transmit responses to mobile device 135. One or more of such responses may include information indicating a URI where a local area map corresponding to floor 100 is accessible.

If a mobile device 135 receives a response to a probe request from a wireless network element, mobile device 135 may subsequently communicate with such a wireless network element. For example, if mobile device 135 is permitted to associate with a particular network element and desires an Internet Protocol (IP) address, mobile device 135 may transmit a Dynamic Host Configuration Protocol (DHCP) "Discover" request to request such an IP address. Upon receipt of such a DHCP Discover request, a wireless network element may respond with a DHCP "Offer" response in which an IP address assigned to mobile device 135 may be contained. A URI indicating a location where a local map associated with the wireless network element may also be included within the DHCP Offer response. Upon receipt of such a DHCP Offer response, mobile device 135 may access the URI and retrieve the associated local map. For example, a URI may be stored in a local map database 145 accessible via the Internet or some other network.

In some implementations, a URI indicating a location where a local map corresponding to an area where mobile device 135 is currently located may be transmitted to mobile device 135 via a network layer broadcast packet. A host attached to a local subnet may listen for broadcast messages on that subnet. One or more of such broadcast messages may contain a relevant URI. One form of an Internet Protocol (IP) subnet specific broadcast is a message delivered to an IP address such as 255.255.255.255 on some specific port. It should be appreciated that there may be subnet-specific versions of such a broadcast utilizing different addresses.

In one particular implementation, a URI may be transmitted to mobile device 135 via a link-layer broadcast frame. For example, there may be an entity located on floor 100 that periodically broadcasts a frame containing the identity of a URI where a local map may be retrieved. Such a broadcast frame may be broadcast by a wireless network element, such as first wireless network element 105, or by some other element within floor 100 that contains a transmitter, such as broadcast message transmitter 160. Broadcast message transmitter 160 may, for example, periodically locally transmit a frame containing such a URI within a compressed format. Upon receipt of such a broadcast frame, mobile device 135 may extract a URI within such a broadcast frame and then retrieve a corresponding local area map stored at the address indicated by such a URI.

In one implementation, a URI may be transmitted to mobile device 135 via beacon information elements, such as a wireless network element or transmitter. For example, multiple elements which are too small individually to transmit such a URI to mobile device 135 may be "stitched" together, or combined, to transmit the URI.

In some implementations, a URI may be encoded into a wireless network element's service set identifier (SSID). For example, devices on a wireless network may utilize a particular SSID in order to communicate with each other. If a local area network element, such as first wireless network element 105, for example, communicates with another element on a local area network, such as second wireless network element 110 or mobile device 135, the SSID may be included in a transmitted message. If mobile device 135 receives such a message from first wireless network element 105, a URI may be extracted from such an SSID, and then mobile device 135 may retrieve a local area map corresponding to floor 100 from the location indicated by the URI.

In one implementation, a URI may be encoded into a wireless network element's basic service set identifier (BSSID). A basic service set may refer to a basic building block of an IEEE 802.11 wireless LAN in one particular implementation. In an infrastructure mode, one wireless network element together with all associated wireless devices or stations may be referred to as a basic service set. A particular wireless network element, such as first wireless network element 105, may transmit both an SSID and a BSSID to mobile device 135. A URI may be encoded in either the SSID, as discussed above, or within the BSSID. For example, both the SSID and the BSSID may be transmitted in a message from first wireless network element 105 to mobile device 135. Upon receipt of such a message, a URI may be extracted from the BSSID and/or SSID. In one particular implementation, a mobile device 135 may be programmed to search for a URI in a received SSID or BSSID.

Use of a local map, as discussed above, provides numerous advantages over a global map. A global map may, for example, be stored in one centralized location. Such a global map may be accessed from such a centralized location and a way of retrieving such a global map may be predefined. However, because such a global map is stored in one centralized location, it may be difficult or cumbersome to update such a global map with information. For example, in the event that the floor plan of a store within a shopping mall is changed during a remodeling process, changes to the floor plan may not be reflected in the global map in a timely manner.

Moreover, a global map may be associated with a global coordinate system, such as the coordinate system associated with Global Positioning System (GPS), or some other Satellite Positioning System (SPS)-defined coordinate system.

A local map, on the other hand, may be much easier to update to reflect changes in elements shown on the local map. Local maps may be easier to maintain because they have only a relatively small field of coverage. Such local maps may be stored in one or more network-accessible locations, such as within a server accessible by the Internet.

Moreover, as pointed out above, a local map need not be associated with a global coordinate system; instead, a local map may be associated with a local coordinate system that may be unrelated to the GPS coordinate system or some other SPS-defined coordinate system. Maps in local coordinate systems may be easier to maintain than maps in global coordinate systems because the position of changed items in maps in local coordinates systems does not have to be determined using navigation signals, such as GPS, or by performing a transformation between coordinates.

Annotations corresponding to a local map may be retrieved before, at the same time, or after the local map has been retrieved. Such annotations may be stored in database 145 shown in FIG. 1 or in some other database or server, such as annotations database 150 or server 155, for example. In one implementation, mobile device 135 may retrieve such annotations from a pre-defined annotations database 150 located at a pre-defined location. Alternatively, a URI for an annotations database 150 may be sent to mobile device 135 in a manner similar to a way in which a URI for local map database 145 is provided to mobile device 135. In other implementations, annotations may be transmitted to mobile device 135 after a local map corresponding to floor 100 has been retrieved from local map database 145. For example, after a local map has been retrieved by mobile device 135 from local map database 145, a message may be sent from local map database 145 to server 155. Server 155 may subsequently retrieve annotations for a local map corresponding to floor 100 from annotations database 150 and transmit such annotations to mobile device 135.

As discussed above, such annotations may include information about wireless network elements. For example, annotations may indicate an estimated processing delay and/or a mathematical model for estimated received signal strength for a signal transmitted by a particular wireless network element. Such annotations may be used by a mobile device to precisely estimate a range between the mobile device and a wireless network element, as discussed below.

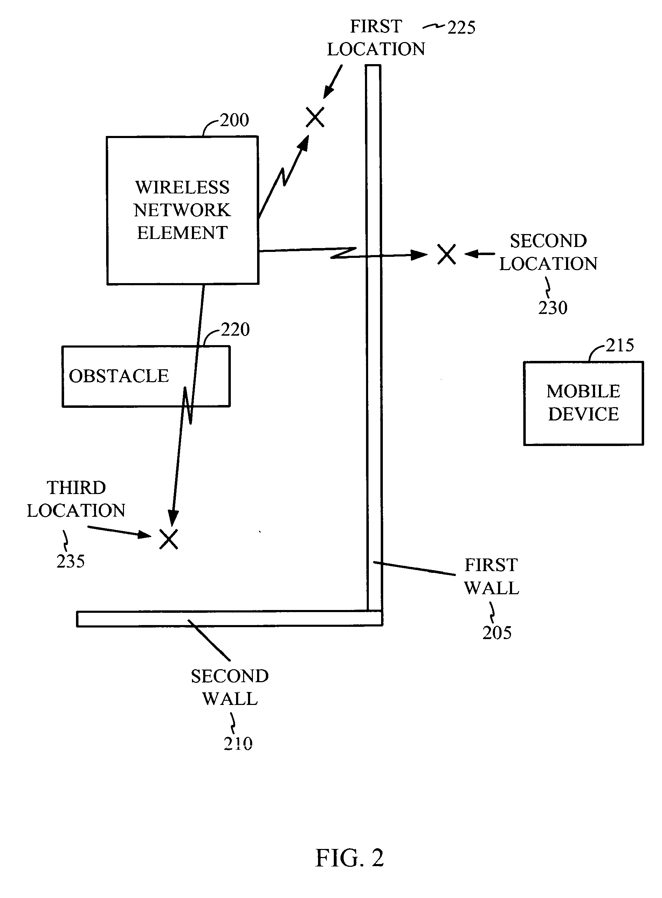

FIG. 2 is an illustration of an area surrounding a wireless network element 200 according to one implementation. FIG. 2 also illustrates a first wall 205, second wall 210, and an obstacle 220. A mobile device 215 may receive a signal transmitted by wireless network element 200 and may estimate its range to wireless network element 200 based, at least in part, on a measured time interval during which a signal is transmitted from wireless network element 200 to mobile device 215.

One way in which a mobile device 215 may estimate a range to wireless network element 200 is by transmitting a probe request to wireless network element 200 and measuring a time interval between when such a probe request is transmitted and when a response signal is received from wireless network element 200. If a mobile device 215 desires to measure a range to wireless network element 200, it may transmit such a probe request to one or more nearby wireless network elements. Such a probe request may indicate that a response signal is to be transmitted back to mobile device 215.

Wirelessly transmitted signals may travel at a constant speed, such as at the speed of light. By measuring how long it takes for a signal to travel from wireless network element 200 to mobile device 215, e.g., a "time-of-flight" of such a signal, a range to wireless network element 200 from mobile device 215 may be estimated. In this example, a probe request is first transmitted from mobile device 215 to wireless network element 200 and then a second signal, e.g., a response signal, is transmitted from wireless network element 200 to mobile device 215. Accordingly, a time-of-flight time interval between transmission of the probe request from mobile device 215 to receipt of a response signal may be divided by a factor of two in order to estimate a range to wireless network element 200 from mobile device 215. Moreover, an estimate of a processing delay incurred by wireless network element 200 may also be taken into account to ensure precise measurements of the actual time that signals are transmitting between mobile device 215 and wireless network element 200. Specifically, there is a period of time from receipt of a probe request at a wireless network element 200 from mobile device 215 to transmission of a response signal from wireless network element 200 to mobile device 215. Such period of time is referred to herein as a "processing delay." Such a processing delay may be incurred, for example, because a wireless network element processes a received probe request and determines how to respond to such a probe request. A processing delay for a particular wireless network element may be estimated based on previous measurements of such a processing delay. Such processing delay estimates may be stored in an annotations database and may be retrieved and utilized by a mobile device 215 if estimating a range to wireless network element 200. Estimates of processing delays for a wireless network element 200 may be updated in an annotations database based on measurements of actual processing delay taken over a period of time.

Another technique to estimate range from mobile device 215 to a wireless network element 200 is based on received signal strength. For example, wireless network elements within a given area may transmit signals at known signal strengths. Alternatively, a code may be transmitted within a signal transmitted by a wireless network element that is indicative of a strength at which such a signal was transmitted. A signal transmitted by a wireless network element may degrade or lose strength the further it travels. A wirelessly transmitted signal may degrade in signal strength at a known rate the further it travels away from a wireless network element from which it was transmitted. Accordingly, by measuring a signal strength of a received signal and comparing it against a strength at which such a signal was transmitted by a wireless network element, a range to the wireless network element from a mobile device receiving such a signal may be estimated.

However, as pointed out above, there may be obstacles disposed between a mobile device and a wireless network element that may dissipate signal strength. For example, if a signal has to travel through a wall, such as first wall 205 or second wall 210 shown in FIG. 2, such a signal may lose more strength as it travels away from wireless network element 200 than it would lose if it did not have to travel through such a wall. In order to estimate a range to a wireless network element 200 from a mobile device 215 with precision, the presence of such obstacles or any other factors besides distance which may degrade signal strength may be factored in when estimating range. Other factors which may degrade signal strength include, for example, interference from other sources if they don't perform a carrier sensing operation and avoid transmission in the presence of an existing signal.

FIG. 2 illustrates three different locations where a mobile device 215 may be located when receiving a signal from wireless network element 200 and estimating a range to wireless network element 200 based on a measured signal strength of a received signal. A signal may be transmitted by wireless network element 200 in response to receipt of a probe request from mobile device 215. Alternatively, wireless network element 200 may broadcast a beacon or some other message or signal received by mobile device 215. As illustrated, if mobile device 215 is located at a first location 225, such a signal may be directly received without travelling through any walls or obstacles. If, on the other hand, mobile device 215 is located at a second location 230, a signal transmitted from wireless network element 200 would therefore travel through first wall 205 prior to reaching the second location 230. Finally, if mobile device 215 is located at a third location 235, a signal transmitted from wireless network element 200 may need to travel through obstacle 220 in order to reach mobile device 215 located at third location 235.

The amount by which the strength of a signal degrades while passing through an object, such as a wall or other obstacle, may depend upon the thickness or density of such a wall/obstacle and a material from which such a wall/obstacle is formed. For example, a wall formed of steel may degrade a signal strength by a greater amount than would a wall formed of a drywall material.

In one particular implementation, a range to a wireless network element may be estimated based both on time-of-flight and on received signal strength. If, for example, an approximate location of a mobile device is triangulated based on ranges estimated based on time-of-flight measurements, then a mathematical model for estimating range based on received signal strength may be utilized to further estimate a range from a mobile device 215 to a wireless network element 200. As discussed above, the amount by which a signal transmitted by wireless network element 200 degrades over distance is dependent, at least in part, upon whether any walls and/or other obstacles are disposed between the wireless network element 200 and the mobile device 215. If the approximate location of mobile device 215 is known via other methods, such as time-of-flight, then an appropriate mathematical relationship between received signal strength and distance may be utilized to estimate range to wireless network element 200 from mobile device 215. For example, if it can be determined that mobile device 215 is located somewhere near second location 230, the presence of first wall 205 may then be factored in if estimating a range from mobile device 215 to wireless network element 200 based on a strength of a signal received by mobile device 215. On the other hand, if it can be determined that mobile device 215 is located somewhere near first location 225, then a different relationship between signal strength and distance may be utilized to estimate a range to wireless network element 200 from mobile device 215. Moreover, if it can be determined that mobile device 215 is located somewhere near third location 235, then a different relationship between signal strength and distance may be utilized to estimate a range from mobile device 215 to wireless network element 200 that accounts for the presence of obstacle 220. Annotations may comprise one or more parameters indicating a relationship between a signal strength measurement and a distance associated with at least one of one or more wireless network elements. Annotations comprise one or more parameters indicating a relationship between a roundtrip time measurement and a distance associated with at least one of one or more wireless network elements.

After ranges to at least three wireless network elements have been determined, a location of such a mobile device may be triangulated.

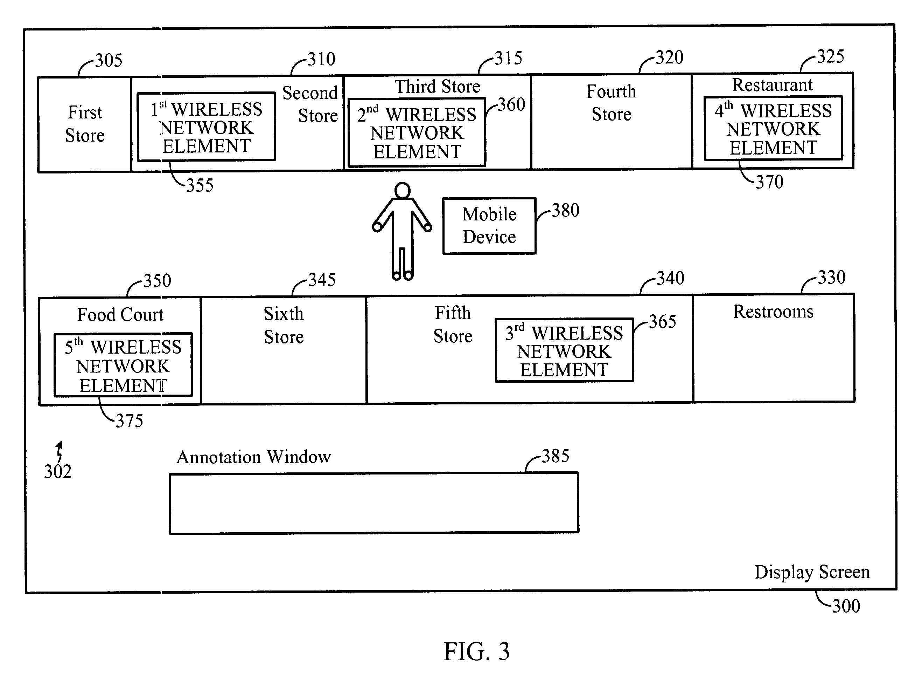

FIG. 3 is a depiction of a display screen 300 of a mobile device according to one implementation. Such a display screen 300 may comprise a graphical user interface for presenting a local map to a user. The local map may present Points of Interest (POIs) to a user. The POIs may be predefined. The annotations may comprise a notation corresponding to at least one predefined POI. In this example, a local map 302 of a shopping mall is presented to a user. As shown, local map 302 includes depictions of POIs such as a first store 305, second store 310, third store 315, a fourth store 320, a restaurant 325, restrooms 330, fifth store 340, sixth store 345, and food court 350. For ease of illustration, several wireless network elements are also displayed to indicate where they are disposed within a shopping mall depicted by local map 302. However, it should be appreciated that in some implementations, such wireless network elements may not be displayed to a user.

In this example, a shopping mall includes a first wireless network element 355, second wireless network element 360, third wireless network element 365, fourth wireless network element 370, and fifth wireless network element 375. As discussed above with respect to FIGS. 1 and 2, signals transmitted by such wireless network elements may be utilized to determine the identity of a local map corresponding to such a shopping mall and a location from which such a local map may be retrieved. Such signals may further be utilized to determine a location of a mobile device within the local map 302 itself. For example, if a user carrying a mobile device 380 is located in a hallway between third store 315 and fifth store 340, a user and/or mobile device 380 may be depicted as being positioned in such a location on local map 302. In some implementations, only portions of a local map 302 depicting locations near a user and/or mobile device 380 may be displayed to a user. Presenting only a partial map at a time may be performed so that a local map 302 is easier for a user to view and interpret in the event that, for example, a large shopping mall with many stores is depicted within such a local map 302.

As discussed above, annotations for wireless network elements may be retrieved from, for example, an annotations database. Such annotations for wireless network elements may be utilized in determining ranges from mobile device 380 to one or more wireless network elements. Such annotations for wireless network elements may not be presented to a user on local map 302 in some implementations. However, other annotations may be presented to a user. For example, in the event that restrooms 330 are out of order or being cleaned, an annotation may be displayed on local map 302 to inform the user of such a status of restrooms 330. A user may therefore avoid moving over to restrooms 330 to use the restroom and may instead seek a different restroom to use. In some implementations, such an annotation may be displayed directly on top of the restrooms 330 shown in local map. Such an annotation may be reflected as text or a large "X," for example, and may be shown over restrooms 330 on local map 302 to indicate that such restrooms 330 are not available. Alternatively, an annotation window 385 may be utilized to display annotations to a user. For example, text annotation may be displayed that reads, "Restrooms across from Restaurant are currently unavailable."

Additional types of annotations may also be displayed to a user. For example, if there are available seats in restaurant 325, a message may be displayed to let the user know that such seats are available. Moreover, if there is a sale on shoes at second store 310, an annotation may be presented to a user to indicate that such a sale is taking place. Additional types of annotations may include opening and closing times for a particular store or other location depicted on local map 302, whether an escalator is out of order, or whether a particular area of the shopping mall is crowded. In some implementations, a user may select a particular area of local map 302, such a first store 305, for example, via a stylus, mouse, track ball, touch screen, buttons/keys, touch pad, control stick, or other selection tool. Upon selecting first store 305, annotations relating to first store 305 may be presented to a user.

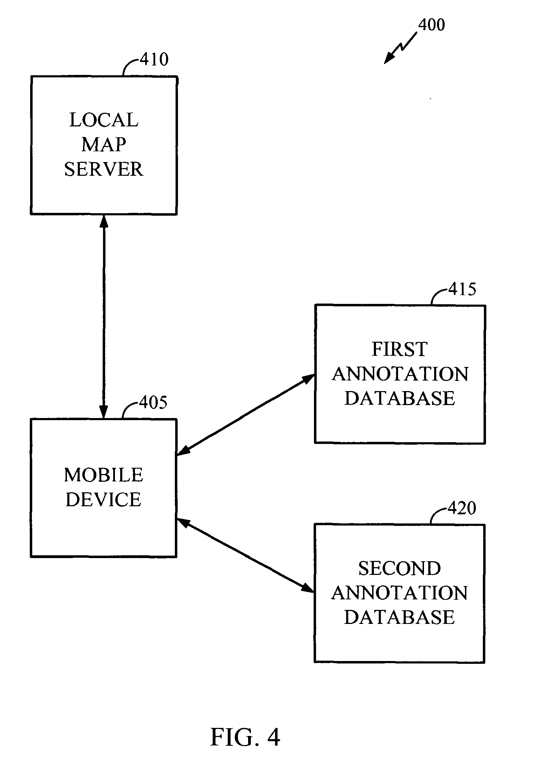

FIG. 4 is a schematic block diagram of a system 400 for providing a local map and annotations to a mobile device 405 according to one implementation. If a user carries a mobile device 405 into an area corresponding to a local map, such as an area in which navigation signals from an SPS may not be available, such a mobile device 405 may determine the identity of such a corresponding local map and a location from which such a local map may be obtained, as discussed above with respect to FIGS. 1 and 2. Mobile device 405 may subsequently retrieve a local map from a local map server 410. For example, mobile device 405 may receive a URI indicating a network location of such a local map server 410 upon entering an area corresponding to a local map. As discussed above, such a local map may utilize a local coordinate system. For example, such local coordinates may indicate 2-dimensional coordinates relative to a point of origin.

After a local map has been retrieved, annotations for such a local map may be retrieved from one or more sources, such as a first annotation database 415 and a second annotation database 420. For example, annotations relating to various wireless network elements may be stored in first annotation database 415, and annotations for providing other information for a local map to a user may be stored in second annotation database 420. Network addresses or locations of first annotation database 415 and second annotation database 420 may be known to mobile device 405 prior to mobile device 405 entering an area corresponding to a local map. Alternatively, for example, locations of such first annotation database 415 and/or second annotation database 420 may be broadcast or otherwise transmitted to mobile device 405 by one or more wireless network elements or transmitters disposed within the area corresponding to the local map, such as a shopping mall. In another implementation, such network addresses or locations of first annotation database 415 and second annotation database 420 may be stored in local map server 410 and may be provided to mobile device 405 when a corresponding local map is retrieved from local map server 410.

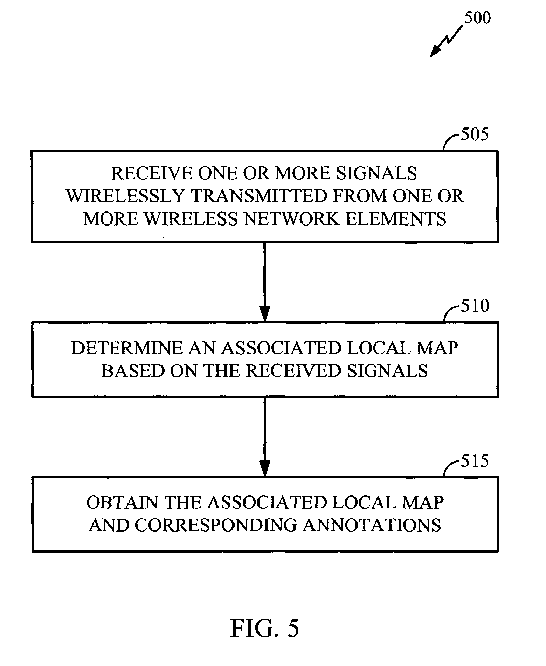

FIG. 5 is a flow diagram illustrating a process 500 for obtaining a local map for a given area according to one implementation. First, at operation 505, a mobile device may receive one or more signals wirelessly transmitted from one or more wireless network elements. Next, at operation 510, such a mobile device may determine the identity of a local map associated with the wireless network elements based at least in part on the received one or more signals. The mobile device may also receive a URI indicating a location, such as a network address, where such a local map may be retrieved. Finally, at operation 515, the associated local map and annotations associated with the associated local map may be retrieved. For example, such annotations may be received at the same time as the local map or after the local map has been retrieved. In some implementations, the local map and the annotations may be stored in the same location. In other implementations, such a local map and annotations may be stored separately.

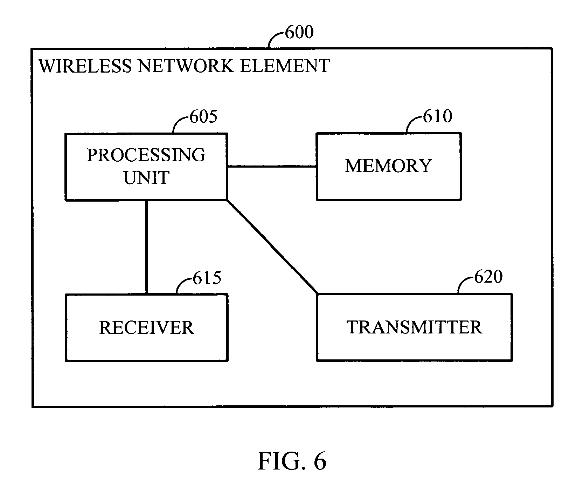

FIG. 6 is a schematic block diagram of a wireless network element 600 according to one implementation. As shown, wireless network element 600 may include various elements, such as a processing unit 605, memory 610, receiver 615, and transmitter 620. Processing unit 605 may control both receiver 615 and transmitter 620. Processing unit 605 may execute program code or instructions stored in memory 610. Receiver 615 may receive communications from a mobile station (e.g., mobile device 135 of FIG. 1), such as a probe request. Transmitter 620 may transmit a response to a probe request to a mobile station. Receiver 615 and/or transmitter 620 may also communicate with other wireless network elements and/or access points. In some implementations, wireless network element 600 may not include a receiver 615. Wireless network element 600 may provide access to a network to one or more mobile communication devices. Wireless network element 600 may communicate with such mobile communication devices via one or more wireless protocols and/or standards, such as IEEE 802.11, 802.15, or 802.16, Worldwide Interoperability for Microwave Access (WiMAX), or Bluetooth, to name just a few among many different types of wireless protocols and/or standards.

Circuitry, such as transmitters and/or receivers may provide functionality, for example, through the use of various wireless communication networks such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as CDMA2000, Wideband-CDMA (W-CDMA), and so on. CDMA2000 includes IS-95, IS-2000, and IS-856 standards. A TDMA network may implement Global System for Communications (GSM), Digital Advanced Phone System (D-AMPS), or some other RAT. GSM and W-CDMA are described in documents from a consortium named "3rd Generation Partnership Project" (3GPP). CDMA2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be used for any combination of WWAN, WLAN and/or WPAN. The techniques may be implemented for use with a Ultra Mobile Broadband (UMB) network, a High Rate Packet Data (HRPD) network, a CDMA2000 1X network, GSM, Long-Term Evolution (LTE), and/or the like.

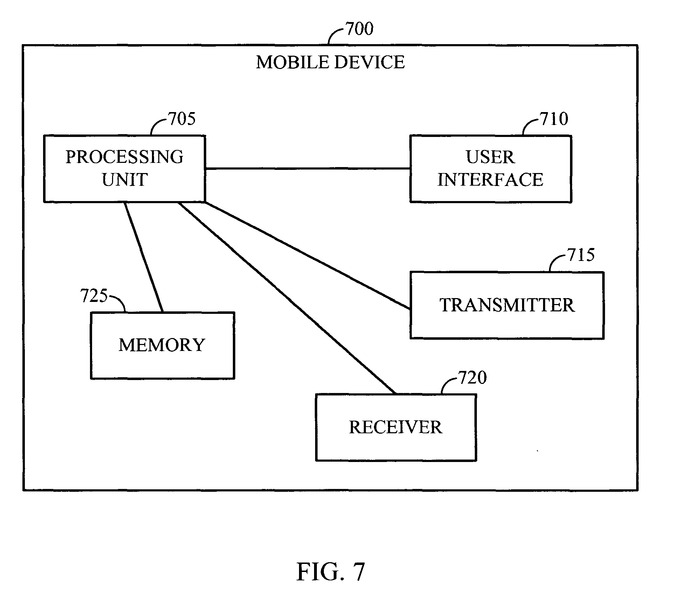

FIG. 7 is a schematic block diagram of a particular implementation of a mobile device 700 according to one implementation. Mobile device 700 may comprise a mobile station (MS) in which a radio transceiver may be adapted to modulate an RF carrier signal with baseband information, such as voice or data, onto an RF carrier, and demodulate a modulated RF carrier to obtain such baseband information.

Mobile device 700 may include several elements such as a processing unit 705, user interface 710, transmitter 715, receiver 720, and memory 725. User interface 710 may comprise a plurality of devices for inputting or outputting user information such as voice or data. Such devices may include, for example, a keyboard/keypad, a display screen (e.g., a touch screen), a microphone, a speaker, buttons and knobs, just to name a few examples.

Memory 725 may be adapted to store machine-readable instructions, which are executable to perform one or more of processes, examples, implementations, or examples thereof which have been described or suggested. Processing unit 705 may be adapted to access and execute such machine-readable instructions. Through execution of these machine-readable instructions, processing unit 705 may direct various elements of mobile device 700 to perform one or more functions.

Transmitter 715 may utilize an antenna to transmit communications, such as packet-based communications to other wireless devices. Receiver 720 may also utilize such an antenna to receive communications, such as packet-based communications from other wireless devices.

Some portions of the detailed description are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular functions pursuant to instructions from program software. Algorithmic descriptions or symbolic representations are examples of techniques used by those of ordinary skill in the signal processing or related arts to convey the substance of their work to others skilled in the art. An algorithm is here, and generally, considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated.

It has proven convenient at times, principally for reasons of common usage, to refer to such signals as bits, data, values, elements, symbols, characters, terms, numbers, numerals or the like. It should be understood, however, that all of these or similar terms are to be associated with appropriate physical quantities and are merely convenient labels. Unless specifically stated otherwise, it is appreciated that throughout this specification discussions utilizing terms such as "processing," "computing," "calculating," "determining" or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device. For example, a specific computing apparatus may comprise one or more processing units programmed with instructions to perform one or more specific functions.

A satellite positioning system (SPS) typically includes a system of transmitters positioned to enable entities to determine their location on or above the Earth based, at least in part, on signals received from the transmitters. Such a transmitter typically transmits a signal marked with a repeating pseudo-random noise (PN) code of a set number of chips and may be located on ground based control stations, user equipment and/or space vehicles. In a particular example, such transmitters may be located on Earth orbiting satellite vehicles (SVs). For example, a SV in a constellation of Global Navigation Satellite System (GNSS) such as Global Positioning System (GPS), Galileo, Glonass or Compass may transmit a signal marked with a PN code that is distinguishable from PN codes transmitted by other SVs in the constellation (e.g., using different PN codes for each satellite as in GPS or using the same code on different frequencies as in Glonass). For SPS, there exist global systems (e.g., GNSS) and various regional systems, such as, e.g., Quasi-Zenith Satellite System (QZSS) over Japan, Indian Regional Navigational Satellite System (IRNSS) over India, Beidou over China, etc., and/or various augmentation systems (e.g., an Satellite Based Augmentation System (SBAS)) that may be associated with or otherwise enabled for use with one or more global and/or regional navigation satellite systems. By way of example but not limitation, an SBAS may include an augmentation system(s) that provides integrity information, differential corrections, etc., such as, e.g., Wide Area Augmentation System (WAAS), European Geostationary Navigation Overlay Service (EGNOS), Multi-functional Satellite Augmentation System (MSAS), GPS Aided Geo Augmented Navigation or GPS and Geo Augmented Navigation system (GAGAN), and/or the like. Thus, as used herein an SPS may include any combination of one or more global and/or regional navigation satellite systems and/or augmentation systems, and SPS signals may include SPS, SPS-like, and/or other signals associated with such one or more SPS.

A mobile station (MS) refers to a device such as a cellular or other wireless communication device, personal communication system (PCS) device, personal navigation device (PND), Personal Information Manager (PIM), Personal Digital Assistant (PDA), laptop or other suitable mobile device which is capable of receiving wireless communication and/or navigation signals. The term "mobile station" also includes devices which communicate with a personal navigation device (PND), such as by short-range wireless, infrared, wireline connection, or other connection - regardless of whether satellite signal reception, assistance data reception, and/or position-related processing occurs at the device or at the PND. Also, "mobile station" includes all devices, including wireless communication devices, computers, laptops, etc. which are capable of communication with a server, such as via the Internet, Wi-Fi, or other network, and regardless of whether satellite signal reception, assistance data reception, and/or position-related processing occurs at the device, at a server, or at another device associated with the network. Any operable combination of the above are also considered a "mobile station."

Methodologies described herein may be implemented by various means depending upon applications according to particular features and/or examples. For example, such methodologies may be implemented in hardware, firmware, software, and/or combinations thereof. In an implementation involving hardware, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices designed to perform the functions described herein, and/or combinations thereof.

For an implementation involving firmware and/or software, certain methodologies may be implemented with modules (e.g., procedures, functions, and so on) that perform the functions described herein. Any machine readable medium tangibly embodying instructions may be used in implementing the methodologies described herein. For example, software codes may be stored in a memory of a mobile station and/or a wireless network element and executed by a processing unit of the device. Memory may be implemented within a processing unit and/or external to the processing unit. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or code on a computer-readable medium. Examples include computer-readable media encoded with a data structure and computer-readable media encoded with a computer program. A computer-readable medium may take the form of an article of manufacture. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage, semiconductor storage, or other storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where *disks* usually reproduce data magnetically, while *discs* reproduce data optically with lasers. Combinations of the above should also be included within the scope of computer-readable media.

In addition to storage on computer-readable medium, instructions and/or data may be provided as signals on transmission media included in a communication apparatus. For example, a communication apparatus may include a transceiver having signals indicative of instructions and data. The instructions and data are configured to cause one or more processing units to implement the functions outlined in the claims. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

"Instructions" as referred to herein relate to expressions which represent one or more logical operations. For example, instructions may be "machine-readable" by being interpretable by a machine for executing one or more operations on one or more data objects. However, this is merely an example of instructions and claimed subject matter is not limited in this respect. In another example, instructions as referred to herein may relate to encoded commands which are executable by a processing unit having a command set which includes the encoded commands. Such an instruction may be encoded in the form of a machine language understood by the processing unit. Again, these are merely examples of an instruction and claimed subject matter is not limited in this respect.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter may also include all aspects falling within the scope of appended claims, and equivalents thereof.

## Claims

1. A method, comprising:
receiving one or more signals wirelessly transmitted from one or more wireless network elements;
identifying, by a mobile device, an associated local map based at least in part on the received one or more signals; and
obtaining the associated local map and annotations associated with the associated local map, wherein the associated local map has a predefined coordinate system, and wherein the annotations comprise at least one of the following:
one or more parameters indicating a relationship between a signal strength measurement and a distance associated with at least one of the one or more wireless network elements,
one or more parameters indicating a relationship between a roundtrip time measurement and a distance associated with at least one of the one or more wireless network elements, and
at least a measurement of a processing delay associated with at least one of the one or more wireless network elements.

2. The method of claim 1, wherein the identifying, by the mobile device, the
associated local map is based at least in part on a Media Access Control identifier, MAC ID, of the one or more signals received.

3. The method of claim 1, further comprising receiving, via the one or more signals, a Uniform Reference Indicator, URI, indicating a location wherein the associated local map is accessible.

4. The method of claim 3, further comprising transmitting a Dynamic Host Configuration Protocol, DHCP, request for an Internet Protocol, IP, address to at least one of the one or more wireless network elements and receiving the URI in a DHCP Offer response from the at least one of the one or more wireless network elements.

5. The method of claim 3, wherein the URI is received via a network layer broadcast packet or from a link-layer broadcast frame.

6. The method of claim 3, further comprising receiving the URI in a signal response to an 802.11 probe request.

7. The method of claim 3, wherein the URI is encoded in one or more service set identifier, SSID, of a wireless network element and/or comprises a network address where the associated local map is stored.

8. An article comprising: a storage medium having stored thereon instructions executable by a processing unit to carry out the steps of any of claims 1 to 7.

9. An apparatus comprising:
means for receiving one or more signals wirelessly transmitted from one or more wireless network elements and an associated local map and annotations associated with the associated local map, wherein the associated local map has a predefined coordinate system; and
means for identifying the associated local map based at least in part on the received one or more signals, and wherein the annotations comprise at least one of the following:
one or more parameters indicating a relationship between a signal strength measurement and a distance associated with at least one of the one or more wireless network elements,
one or more parameters indicating a relationship between a roundtrip time measurement and a distance associated with at least one of the one or more wireless network elements, and
at least a measurement of a processing delay associated with at least one of the one or more wireless network elements.

10. The apparatus of claim 9, wherein means for identifying is capable of identifying the associated local map based at least in part on a Media Access Control Identifier, MAC ID, of the one or more signals received.

11. The apparatus of claim 9, wherein the means for receiving is capable of receiving, via the one or more signals, a Uniform Reference Indicator, URI, indicating a location wherein the associated local map is accessible, preferably in a Dynamic Host Configuration Protocol, DHCP, Offer response from at least one of the one or more wireless network elements.

12. The apparatus of claim 11, wherein the means for receiving is capable of receiving the URI via a network layer broadcast packet or via a link-layer broadcast frame.

13. The apparatus of claim 11, wherein the means for receiving is capable of receiving the URI in a signal response to an 802.11 probe request.

14. The apparatus of claim 9 or the method of claim 1, wherein the predefined coordinate system comprises a local coordinate system or a global coordinate system.

15. The apparatus of claim 9 or the method of claim 1, wherein the one or more wireless network elements comprise at least one femtocell.

## Patentansprüche

1. Ein Verfahren, das Folgendes aufweist:
Empfangen eines oder mehrerer Signale, die drahtlos von einem oder mehreren Drahtlosnetzwerkelementen gesendet werden;
Identifizieren, durch eine Mobileinrichtung, einer assoziierten lokalen Karte zumindest teilweise basierend auf dem empfangenen einen oder den empfangenen mehreren Signalen; und
Erlangen der assoziierten lokalen Karte und von Ergänzungen, die mit der assoziierten lokalen Karte assoziiert sind, und wobei die Ergänzungen wenigstens eines von Folgendem aufweisen:
einen oder mehrere Parameter, die eine Beziehung zwischen einer Signalstärkemessung und einer Distanz anzeigen, die mit wenigstens einem der ein oder mehreren Drahtlosnetzwerkelemente assoziiert ist,
einen oder mehrere Parameter, die eine Beziehung zwischen einer Umlaufzeitmessung und einer Distanz anzeigen, die mit wenigstens einem der ein oder mehreren Drahtlosnetzwerkelemente assoziiert ist, und
wenigstens eine Messung einer Verarbeitungsverzögerung, die mit wenigstens einem der einen oder mehreren Drahtlosnetzwerkelemente assoziiert ist.

2. Verfahren nach Anspruch 1, wobei das Identifizieren, durch die Mobileinrichtung, der assoziierten lokalen Karte zumindest teilweise auf einem Medienzugriffssteuerungs-Identifikator bzw. einem MAC ID (MAC ID = Media Access Control Identifier) des einen oder der mehreren empfangenen Signale basiert.

3. Verfahren nach Anspruch 1, das weiter das Empfangen, über das eine oder die mehreren Signale, eines URI bzw. Uniform Reference Indicator aufweist, der einen Ort anzeigt, wobei auf die assoziierte lokale Karte zugegriffen werden kann.

4. Verfahren nach Anspruch 3, das weiter das Senden einer Dynamic-Host-Configuration-Protocol- bzw. DHCP-Anfrage nach einer Internet-Protokoll- bzw. IP-Adresse an wenigstens eines der ein oder mehreren Drahtlosnetzwerkelemente und das Empfangen des URI in einer DHCP-Offertenantwort von dem wenigstens einen der einen oder mehreren Drahtlosnetzwerkelemente aufweist.

5. Verfahren nach Anspruch 3, wobei der URI über ein Netzwerkschicht- bzw. - Network-Layer-Broadcast-Paket oder von einem Verbindungsschicht- bzw. Link-Layer-Broadcast-Rahmen empfangen wird.

6. Verfahren nach Anspruch 3, das weiter das Empfangen des URI in einer Signalantwort auf eine 802.11-Prüfanfrage aufweist.

7. Verfahren nach Anspruch 3, wobei der URI in ein oder mehrere Service-Set-Identifier bzw. SSIDs eines Drahtlosnetzwerkelements codiert ist und/oder eine Netzwerkadresse aufweist, wo die assoziierte lokale Karte gespeichert ist.

8. Ein Artikel, der Folgendes aufweist: ein Speichermedium, das darauf gespeichert Instruktionen trägt, die von einer Verarbeitungseinheit ausgeführt werden können, um die Schritte nach einem der Ansprüche 1 bis 7 auszuführen.

9. Eine Vorrichtung, die Folgendes aufweist:
Mittel zum Empfangen eines oder mehrerer Signale, die drahtlos von einem oder mehreren Drahtlosnetzwerkelementen übertragen werden und einer assoziierten lokalen Karte und von Ergänzungen, die mit der assoziierten lokalen Karte assoziiert sind, wobei die assoziierte lokale Karte ein vordefiniertes Koordinatensystem hat; und
Mittel zum Identifizieren der assoziierten lokalen Karte basierend wenigstens teilweise auf dem empfangenen einen oder den empfangenen mehreren Signalen, und wobei die Ergänzungen wenigstens eines von Folgendem aufweisen:
einen oder mehrere Parameter, die eine Beziehung zwischen einer Signalstärkenmessung und einer Distanz aufweisen, die mit wenigstens einem der einen oder mehreren Drahtlosnetzwerkelemente assoziiert ist,
einen oder mehrere Parameter, die eine Beziehung zwischen einer Umlaufzeitmessung und einer Distanz anzeigen, die mit wenigstens einem der ein oder mehreren Drahtlosnetzwerkelemente assoziiert ist, und
wenigstens eine Messung einer Verarbeitungsverzögerung, die mit wenigstens einem der einen oder mehreren Drahtlosnetzwerkelemente assoziiert ist.

10. Vorrichtung nach Anspruch 9, wobei die Mittel zum Identifizieren in der Lage sind, die assoziierte lokale Karte zumindest teilweise basierend auf einem Medienzugriffssteuerungs-Identifikator bzw. einem MAC ID (MAC ID = Media Access Control Identifier) des einen oder der mehreren empfangenen Signale zu identifizieren.

11. Vorrichtung nach Anspruch 9, wobei die Mittel zum Empfangen in der Lage sind, über das eine oder die mehreren Signale, einen URI bzw. Uniform Reference Indicator zu empfangen, der einen Standort anzeigt, wobei auf die assoziierte lokale Karte zugegriffen werden kann, und zwar vorzugsweise in einer DHCP-Offertenantwort von wenigstens einem der ein oder mehreren Drahtlosnetzwerkelemente.

12. Vorrichtung nach Anspruch 11, wobei die Mittel zum Empfangen in der Lage sind, den URI über ein Netzwerkschicht- bzw. Network-Layer-Broadcast-Paket oder über einen Verbindungsschicht- bzw. Link-Layer-Broadcast-Rahmen zu empfangen.

13. Vorrichtung nach Anspruch 11, wobei die Mittel zum Empfangen in der Lage sind, den URI in einer Signalantwort auf eine 802.11-Prüfanfrage zu empfangen.

14. Vorrichtung nach Anspruch 9 oder Verfahren nach Anspruch 1, wobei das vordefinierte Koordinatensystem ein lokales Koordinatensystem oder ein globales Koordinatensystem aufweist.

15. Vorrichtung nach Anspruch 9 oder Verfahren nach Anspruch 1, wobei das eine oder die mehreren Drahtlosnetzwerkelemente wenigstens eine Femtozelle aufweisen.

## Revendications

1. Procédé comprenant les étapes suivantes :
recevoir un ou plusieurs signaux transmis sans fil à partir d'un ou plusieurs éléments de réseau sans fil ;
identifier, par un dispositif mobile, une carte locale associée sur la base au moins en partie desdits un ou plusieurs signaux reçus ; et
obtenir la carte locale associée et des annotations associées à la carte locale associée, la carte locale associée ayant un système de coordonnées prédéfini, et les annotations comprenant au moins l'un des éléments suivants :
un ou plusieurs paramètres indiquant une relation entre une mesure d'intensité de signal et une distance associée à au moins l'un desdits un ou plusieurs éléments de réseau sans fil,
un ou plusieurs paramètres indiquant une relation entre une mesure de temps d'aller-retour et une distance associée à au moins l'un desdits un ou plusieurs éléments de réseau sans fil, et
au moins une mesure d'un délai de traitement associé à au moins l'un desdits un ou plusieurs éléments de réseau sans fil.

2. Procédé selon la revendication 1, dans lequel l'identification, par le dispositif mobile, de la carte locale associée est basée au moins en partie sur un Identificateur de Contrôle d'Accès au Support, MAC ID, desdits un ou plusieurs signaux reçus.

3. Procédé selon la revendication 1, comprenant en outre la réception, par l'intermédiaire desdits un ou plusieurs signaux, d'un Indicateur de Référence Uniforme, URI, indiquant un emplacement dans lequel la carte locale associée est accessible.

4. Procédé selon la revendication 3, comprenant en outre la transmission d'une requête du Protocole de Configuration d'Hôte Dynamique, DHCP, pour une adresse du protocole Internet, IP, à au moins l'un desdits un ou plusieurs éléments de réseau sans fil et la réception de l'URI dans une réponse d'Offre DHCP provenant dudit au moins l'un desdits un ou plusieurs éléments de réseau sans fil.

5. Procédé selon la revendication 3, dans lequel l'URI est reçue par l'intermédiaire d'un paquet diffusé de couche réseau ou à partir d'une trame diffusée de couche liaison.

6. Procédé selon la revendication 3, comprenant en outre la réception de l'URI dans une réponse de signal à une requête de sonde 802.11.

7. Procédé selon la revendication 3, dans lequel l'URI est codée dans un ou plusieurs Identificateurs d'Ensemble de Services, SSID, d'un élément de réseau sans fil et/ou comprend une adresse réseau où est mémorisée la carte locale associée.

8. Article comprenant un support de stockage comportant, mémorisées sur lui, des instructions exécutables par une unité de traitement pour réaliser les étapes de l'une quelconque des revendications 1 à 7.

9. Appareil comprenant :
des moyens pour recevoir un ou plusieurs signaux transmis sans fil à partir d'un ou plusieurs éléments de réseau sans fil, et une carte locale associée et des annotations associées à la carte locale associée, la carte locale associée ayant un système de coordonnées prédéfini ; et
des moyens pour identifier la carte locale associée sur la base au moins en partie desdits un ou plusieurs signaux reçus, et les annotations comprenant au moins l'un des éléments suivants :
un ou plusieurs paramètres indiquant une relation entre une mesure d'intensité de signal et une distance associée à au moins l'un desdits un ou plusieurs éléments de réseau sans fil,
un ou plusieurs paramètres indiquant une relation entre une mesure de temps d'aller-retour et une distance associée à au moins l'un desdits un ou plusieurs éléments de réseau sans fil, et
au moins une mesure d'un délai de traitement associé à au moins l'un desdits un ou plusieurs éléments de réseau sans fil.

10. Appareil selon la revendication 9, dans lequel les moyens pour identifier sont capables d'identifier la carte locale associée sur la base au moins en partie d'un Identificateur de Contrôle d'Accès au Support, MAC ID, desdits un ou plusieurs signaux reçus.

11. Appareil selon la revendication 9, dans lequel les moyens pour recevoir sont capables de recevoir, par l'intermédiaires desdits un ou plusieurs signaux, un Indicateur de Référence Uniforme, URI, indiquant un emplacement dans lequel la carte locale associée est accessible, de préférence dans une réponse d'Offre du Protocole de Configuration d'Hôte Dynamique, DHCP, provenant d'au moins l'un desdits un ou plusieurs éléments de réseau sans fil.

12. Appareil selon la revendication 11, dans lequel les moyens pour recevoir sont capables de recevoir l'URI par l'intermédiaire d'un paquet diffusé de couche réseau ou par l'intermédiaire d'une trame diffusée de couche liaison.

13. Appareil selon la revendication 11, dans lequel les moyens pour recevoir sont capables de recevoir l'URI dans une réponse de signal à une requête de sonde 802.11.

14. Appareil selon la revendication 9 ou procédé selon la revendication 1, dans lequel le système de coordonnées prédéfini comprend un système de coordonnées local ou un système de coordonnées global.

15. Appareil selon la revendication 9 ou procédé selon la revendication 1, dans lequel lesdits un ou plusieurs éléments de réseau sans fil comprennent au moins une femtocellule.
